# EUROPEAN PATENT SPECIFICATION

(11) **EP 3 723 898 B1**
(45) Date of publication and mention of the grant of the patent: **05.05.2021**
(21) Application number: 19702283.3
(22) Date of filing: 04.02.2019
(51) Int. Cl.: B01J 8/24, C08F 2/01, C08F 2/34, C08F 10/00

(54) **PROCESS FOR POLYMERIZING OLEFINS IN THE GAS-PHASE**
VERFAHREN ZUR POLYMERISATION VON OLEFINEN IN DER GASPHASE
PROCÉDÉ DE POLYMÉRISATION D'OLÉFINES EN PHASE GAZEUSE

(30) Priority: 07.02.2018 EP 18155559
(43) Date of publication of application: 21.10.2020
(73) Proprietor: Basell Polyolefine GmbH, 50389 Wesseling (DE)
(72) Inventor: BAITA, Pietro, 44122 Ferrara (IT); DORINI, Maurizio, 44122 Ferrara (IT); MEI, Giulia, 44122 Ferrara (IT); MEIER, Gerhardus, Houston, TX 77009 (US); PENZO, Giuseppe, 44122 Ferrara (IT); RINALDI, Riccardo, 44122 Ferrara (IT)
(74) Representative: LyondellBasell
(86) International application number: PCT/EP2019/052624
(87) International publication number: WO 2019/154756

(56) References cited:
- EP-A1- 2 602 269
- EP-A1- 2 722 347
- WO-A1-97/04015

## Description

### FIELD OF THE INVENTION

The present disclosure provides a gas-phase polymerization reactor for the gas-phase polymerization of olefins and a process for preparing an olefin polymer in the gas-phase polymerization reactor. The present disclosure especially provides a gas-phase polymerization reactor for the gas-phase polymerization of olefins which is equipped with a recycle line for withdrawing reaction gas from the reactor, leading the reaction gas through a heat-exchanger for cooling and feeding the reaction gas back to the reactor.

### BACKGROUND OF THE INVENTION

Gas-phase polymerization processes are economical processes for the polymerization of olefins such as homopolymerizing ethylene or propylene or copolymerizing ethylene or propylene with other olefins. Suitable reactors for carrying out such gas-phase polymerizations are for example fluidized-bed reactors, stirred gas-phase reactors or multizone circulating reactors with two distinct interconnected gas-phase polymerization zones. These processes are usually carried out in a gas phase comprising monomers and comonomers and often additionally also other gaseous components such as polymerization diluents, for example nitrogen or alkanes, or hydrogen as molecular weight modifier or low-molecular weight reaction products. The obtained products are generally solid polyolefin particles which are formed by polymerization catalyst systems usually comprising particulate catalyst solids.

Olefin gas-phase polymerization processes are characterized in that large amounts of gas are withdrawn from the reaction zone, passed through a heat-exchanger for removing the heat of polymerization and then returned to the polymerization zone. In fluidized-bed reactors, the returned reaction gas further serves to maintain the polyolefin particles in fluidized state. In multizone circulating reactors, the circulation between the reactor zones is effected by the returned reaction gas. To drive all these processes, the recycle lines for the reaction gas are commonly equipped with a centrifugal compressor.

Centrifugal compressors typically comprise guide vanes, which are installed at the gas entry of the compressor and direct the gas flow onto the centrifugal impeller. Such guide vanes can be fixed guide vanes or the guide vanes are variable. If variable guide vanes are installed, it is possible to modify the gas intake angle of the compressor by varying the position of the guide vanes. As a result of such a modification, the gas flow rate effected by a centrifugal compressor can be varied. However, this modification not only affects the gas flow rate but also the pressure differential across the compressor.

WO 98/54231 A1, for example, discloses a process for the polymerization of one or more alpha olefins in a fluidized-bed reactor, in which either a cycle gas valve or compressor inlet guide vanes are used to manipulate the cycle gas flow rate in order to control the temperature of the fluidized bed. However, in both cases such a variation not only influences the gas flow rate but also the pressure of the recycling gas.

To be able to adapt the polymerization conditions to all possible situations, there might nonetheless be a requirement to adjust the fluidization gas flow rate independently from the differential pressure.

There is accordingly a need to provide a polymerization process which allows in a simple manner to manipulate the gas flow rate while keeping constant the differential pressure across the compressor or to vary the differential pressure across the compressor while keeping the gas flow rate constant.

### SUMMARY OF THE INVENTION

The present disclosure provides a gas-phase polymerization reactor for the gas-phase polymerization of olefins comprising at least one polymerization zone which is equipped with a recycle line for withdrawing reaction gas from the reactor, leading the reaction gas through a heat-exchanger for cooling and feeding the reaction gas back to the reactor, wherein the recycle line is equipped with the heat-exchanger, a centrifugal compressor comprising variable guide vanes, and a butterfly valve, and the variable guide vanes are arranged upstream of the centrifugal compressor and the butterfly valve is arranged downstream of the centrifugal compressor.

In some embodiments, the recycle line has one or more side lines and the side lines branch off the recycle line at a position between the centrifugal compressor and the butterfly valve and the one or more side lines are equipped with control valves for controlling the flow rate of the branched-off recycle gas in the side lines.

In some embodiments, the butterfly valve comprises a rotational disc which has a smaller area than the cross-section of the recycle line at the location of the butterfly valve.

In some embodiments, the butterfly valve is arranged downstream of the heat-exchanger.

In some embodiments, the centrifugal compressor is arranged upstream of the heat-exchanger.

In some embodiments, the recycle line is further equipped with a cyclone upstream of the centrifugal compressor and the heat-exchanger.

In some embodiments, the reactor is a fluidized-bed reactor.

In some embodiments, the reactor is a multizone circulating reactor in which one polymerization zone is a riser, in which growing polyolefin particles flow upwards under fast fluidization or transport conditions, and another polymerization zone is a downcomer, in which the growing polyolefin particles flow downward in a densified form, wherein the riser and the downcomer are interconnected and polyolefin particles leaving the riser enter the downcomer and polyolefin particles leaving the downcomer enter the riser, thus establishing a circulation of polyolefin particles through the riser and the downcomer.

In some embodiments, the reactor is part of a reactor cascade.

In some embodiments, the reactor cascade comprises a first gas-phase reactor and a subsequent second gas-phase reactor and a side line, which branches off the recycle line of the second gas-phase reactor, is the transfer line for transferring polyolefin particles from the first gas-phase reactor to the second gas-phase reactor.

In some embodiments, the present disclosure provides a process for preparing an olefin polymer comprising homopolymerizing an olefin or copolymerizing an olefin and one or more other olefins at temperatures of from 20 to 200°C and pressures of from 0.5 to 10 MPa in the presence of a polymerization catalyst, wherein the polymerization is carried out in the gas-phase polymerization reactor of any of claims 1 to 10.

In some embodiments, the polymerization is carried out at a pre-determined pressure differential across the centrifugal compressor and variations of the recycle gas flow rate are carried out by both varying the position of the guide vanes and the position of the butterfly valve.

In some embodiments, the recycle line has one or more side lines and the side lines branch off the recycle line at a position between the centrifugal compressor and the butterfly valve and the one or more side lines are equipped with control valves for controlling the flow rate of the branched-off recycle gas in the side lines and the pressure in the one or more side lines upstream of the control valves is from 0.01 MPa to 0.2 MPa higher than the pressure in the recycle line downstream of the butterfly valve.

In some embodiments, the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene.

In some embodiments, the polyolefin is a high density polyethylene having a density determined according to ISO 1183 at 23°C from 0.945 to 965 g/cm³.

### BRIEF DESCRIPTION OF THE DRAWINGS

Figure 1 shows schematically a fluidized-bed reactor for carrying out the process of the present disclosure.
Figure 2 shows schematically a multizone circulating reactor for carrying out the process of the present disclosure.
Figure 3 shows schematically a cascade of two serially connected gas-phase reactors for carrying out the process of the present disclosure.

### DETAILED DESCRIPTION OF THE INVENTION

The present disclosure provides a gas-phase polymerization reactor for the gas-phase polymerization of olefins comprising at least one polymerization zone which is equipped with a recycle line for withdrawing reaction gas from the reactor, leading the reaction gas through a heat-exchanger for cooling and feeding the reaction gas back to the reactor, wherein the recycle line is equipped with a centrifugal compressor and a heat-exchanger. Such reactors can be fluidized-bed reactors, stirred gas-phase reactors or multizone circulating reactors with two distinct interconnected gas-phase polymerization zones. Reactors of these types are generally known to those skilled in the art. Stirred gas-phase reactors can, for example, be horizontally or vertically stirred. Preferred gas-phase polymerization reactors according to the present disclosure are fluidized-bed reactors and multizone circulating reactors.

Fluidized-bed reactors are reactors in which the polymerization takes place in a bed of polyolefin particles which is maintained in a fluidized state by feeding in a reaction gas mixture at the lower end of a reactor, usually below a gas distribution grid having the function of dispensing the gas flow, and taking off the gas again at the top of the fluidized-bed reactor. The reaction gas mixture is then returned to the lower end of the reactor via a recycle line equipped with a centrifugal compressor and a heat exchanger for removing the heat of polymerization. The flow rate of the reaction gas mixture has to be sufficiently high firstly to fluidize the bed of finely divided polymer present in the polymerization zone and secondly to remove the heat of polymerization effectively.

Multizone circulating reactors are, for example, described in WO 97/04015 A1 and WO 00/02929 A1 and have two interconnected polymerization zones, a riser, in which the growing polyolefin particles flow upward under fast fluidization or transport conditions and a downcomer, in which the growing polyolefin particles flow downward in a densified form under the action of gravity. The polyolefin particles leaving the riser enter the downcomer and the polyolefin particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyolefin and reaction gaseous mixture coming from the riser. The growing polyolefin particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is equipped with a centrifugal compressor and a heat exchanger for removing the heat of polymerization. Preferably, a line for feeding catalyst or a line for feeding polyolefin particles coming from an upstream reactor is arranged on the riser and a polymer discharge system is located in the bottom portion of the downcomer. The introduction of make-up monomers, comonomers, hydrogen and/or inert components may occur at various points along the riser and the downcomer.

Olefins which may be polymerized in the gas-phase polymerization reactors of the present disclosure are especially 1-olefins, i.e. hydrocarbons having terminal double bonds, without being restricted thereto. Preference is given to nonpolar olefinic compounds. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norborna-diene or ethylnorbornadiene. It is also possible to polymerize mixtures of two or more olefins.

The gas-phase polymerization reactors are in particular suitable for the homopolymerization or copolymerization of ethylene or propylene and is especially preferred for the homopolymerization or copolymerization of ethylene. Preferred comonomers in propylene polymerization are up to 40 wt.% of ethylene, 1-butene and/or 1-hexene, preferably from 0.5 wt.% to 35 wt.% of ethylene, 1-butene and/or 1-hexene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to polymerizations in which ethylene is copolymerized with from 0.1 wt.% to 12 wt.% of 1-hexene and/or 1-butene.

The gas-phase reactors of the present disclosure are characterized in that the recycle line is equipped with both a centrifugal compressor comprising variable guide vanes and a butterfly valve. The variable guide vanes are arranged upstream of the centrifugal compressor and the butterfly valve is arranged downstream of the centrifugal compressor. The variable guide vanes of the compressor allow to modify the gas intake angle of the compressor and so to influence the gas flow rate and the differential pressure. By increasing the guide vanes opening, both the gas flow rate and the differential pressure increases. Vice versa, decreasing the guide vanes opening decreases the gas flow rate and the differential pressure. The other equipment for influencing the gas flow rate and the differential pressure within the recycle line is a butterfly valve. Butterfly valves are flow control devices which comprise a rotational disk installed within a passageway. Regarding the gas-phase reactors of the present disclosure, this means that the rotational disk is installed within a tubing of the recycle line. By increasing the butterfly valve opening, the gas flow rate increases and the differential pressure across the compressor decreases. Vice versa, decreasing the butterfly valve opening decreases the gas flow rate and increases the differential pressure across the compressor. Therefore, by making these adjustments simultaneously, it is, for example, possible to achieve an increased fluidization gas flow rate while maintaining the same differential pressure across the compressor.

Utilizing a butterfly valve as instrument for controlling the flow rate of the recycle gas has the advantage, compared with other types of control valves, that is possible to establish a variable pressure drop in the recycle line while the device has a low risk for fouling. Preferably, the butterfly valve is constructed in a way that sharp edges and corners are avoided within the butterfly valve because this minimizes the risk that small, still catalytically active particles which are entrained with the recycle gas adhere to parts of the butterfly valve.

In a preferred embodiment of the present disclosure, the butterfly valve comprises a rotational disc which has a smaller area than the cross-section of the recycle line at the location of the butterfly valve. That means, when the butterfly valve is in fully closed position, i.e. the rotational disc is positioned perpendicular to the gas flow, the gas flow is not fully blocked. Preferably, the area of the rotational disc is from 90% to 99% of the cross-section of the recycle line at the location of the butterfly valve, more preferably the area of the rotational disc is from 94% to 98% of the cross-section of the recycle line at the location of the butterfly valve. In a preferred embodiment of the butterfly valve, the rotational disc is circular and the non-blocked area of the recycle line at the location of the butterfly valve in closed position forms an annular gap around the rotational disc. In a preferred embodiment of the butterfly valve, the rotational disc is centrically fixed and rotates around an axis running through the center of the rotational disc. Preferably, the butterfly valve is arranged at a location of the recycle line where the recycle line has no restriction.

In a preferred embodiment of the present disclosure, the recycle line has one or more side lines and the side lines branch off the recycle line at a position between the centrifugal compressor and the butterfly valve and the one or more side lines are equipped with control valves for controlling the flow rate of the branched-off recycle gas in the side lines. The design of the gas-phase polymerization reactors of the present disclosure allows to operate the side lines with a predetermined differential pressure across the control valve independently from the recycle gas flow rate. This ensures that the control valves can be operated in a predetermined optimal control range. Preferably, such an optimal control range includes a wide valve opening to minimize the risk of fouling due to entrained small particles.

When controlling the flow of the recycle gas in the recycle line only with variable guide vanes and not with a combination of variable guide vanes and a further control valve such as a butterfly valve downstream of the branching-off position of the side lines, a reactor situation which needs a reduced flow rate of the recycle gas in the recycle line, such as for example a start-up of the gas-phase polymerization, would result in a reduced differential pressure across the compressor inducing also a reduced differential pressure across the control valves. To maintain an intended gas flow through the side lines, the control valves would need to open further; implying a risk that the control valves could leave the optimal control range or, if the design of the control valves is different, the operation of the control valve is not in an optimal control range when the flow rate of the recycle gas is not reduced. Further, in a set-up in which the recycle gas branched off into the side lines is used as transportation gas or carrier gas, a reduced differential pressure across the compressor could mean that the pressure differential which is needed that the recycle gas branched off into the side lines can act as transportation gas or carrier gas is not reached, or at least not fully reached.

Another advantage of the gas-phase polymerization reactors of the present disclosure is that a partial fouling of equipment in the gas cycle, such as partial fouling of the heat exchanger or partial fouling of a gas distribution grid can easily be compensated by an appropriate wider opening of the butterfly valve without having changes in the differential pressures across the control valves in the side lines. Without such a control valve such as a butterfly valve downstream of the branching-off position of the side lines, an opening of the compressor guide vanes would be needed, resulting in a higher pressure downstream of the compressor and implying a risk that the control valves could leave the optimal control range.

The heat exchanger can be arrange at various positions of the recycle line. It is possible to have the heat exchanger installed upstream of the variable guide vanes and the centrifugal compressor, the heat exchanger can be arranged between centrifugal compressor and butterfly valve, and it is possible to have the heat exchanger installed downstream of the butterfly valve. In a preferred embodiment of the present disclosure, the butterfly valve is arranged downstream of the heat-exchanger.

Preferably, the centrifugal compressor is arranged upstream of the heat-exchanger.

In a preferred embodiment of the present disclosure, the recycle line is further equipped with a cyclone upstream of the centrifugal compressor and the heat-exchanger.

In a preferred embodiment of the present disclosure, the gas-phase polymerization reactor is a fluidized-bed reactor equipped with a circulation loop connected to the gas distribution grid for recycling polyolefin particles from the gas distribution grid to the upper region the fluidized-bed reactor. The carrier gas for conveying the polyolefin particles through the circulation loop is recycle gas which is provided by a side line which branches off the recycle line. Fluidized-bed reactors of such a type are, for example, disclosed by WO 2007/071527 A1. By having the recycle line equipped with both a centrifugal compressor comprising variable guide vanes and a butterfly valve, it is possible to reduce the flow rate of the recycle gas, for example in the start-up phase to reduce carry-over of fines, while keeping a sufficient high differential pressure across the side line branching off the recycle line for pneumatically transporting the polyolefin particles in the circulation loop.

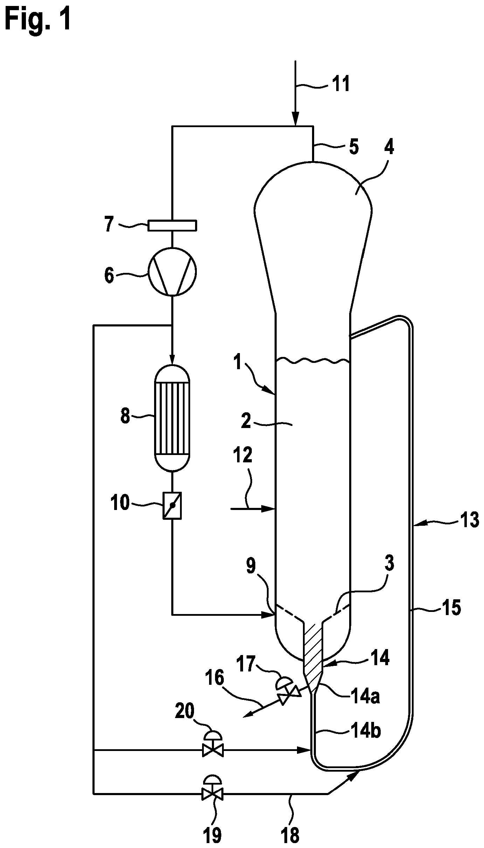

Figure 1 shows schematically a fluidized-bed reactor for carrying out the process of the present disclosure.

The fluidized-bed reactor (1) comprises a fluidized bed (2) of polyolefin particles, a gas distribution grid (3) and a velocity reduction zone (4). The velocity reduction zone (4) is generally of increased diameter compared to the diameter of the fluidized-bed portion of the reactor. The polyolefin bed is kept in a fluidization state by an upwardly flow of gas fed through the gas distribution grid (3) placed at the bottom portion of the reactor (1). The gaseous stream of the reaction gas leaving the top of the velocity reduction zone (4) via recycle line (5) is compressed by centrifugal compressor (6) comprising variable guide vanes (7), transferred to a heat exchanger (8), in which it is cooled, and then recycled to the bottom of the fluidized-bed reactor (1) at a point below the gas distribution grid (3) at position (9). The recycle line (5) further comprises, downstream of heat exchanger (8), a butterfly valve (10). Make-up monomers, molecular weight regulators, and optional inert gases can be fed into the reactor (1) at various positions, for example via line (11) upstream of the compressor (6). Generally, the catalyst is fed into the reactor (1) via a line (12) that is preferably placed in the lower part of the fluidized bed (2).

The fluidized-bed reactor (1) is provided with a continuous pneumatic recycle of polyolefin particles by means of a circulation loop (13) connecting the gas distribution grid (3) to the upper region of the fluidized-bed reactor (1). The circulation loop (13) comprises a settling pipe (14) which is integrated with its upper opening into the gas distribution grid (3) and is preferably arranged substantially vertical. The settling pipe (14) has a section of higher diameter (14a) and a section of lower diameter (14b). The gas distribution grid (3) is endowed with a cone shape in such a way that its downward inclination towards the settling pipe (14) fosters the entry of the polyolefin particles into the settling pipe (14) due to gravity. The upper opening of the settling pipe (14) is preferably located in a central position with respect to the gas distribution grid (3). The lower part of the settling pipe (14) is connected to a pneumatic conveyor pipe (15), which has the function of reintroducing the polyolefin particles into the fluidized-bed reactor (1). The outlet of the pneumatic conveyor pipe (15) is preferably placed above the polymer bed (2) and below the velocity reduction zone (4).

The discharge of polyolefin particles from the fluidized-bed reactor (1) occurs through discharge conduit (16) which is attached to the settling pipe section of higher diameter (14a). A control valve (17) is installed in discharge conduit (16) in proximity of settling pipe (14) for adjusting the flow rate of the polyolefin particles discharged from the fluidized-bed reactor (1) into the discharge conduit (16). The discharge of the polyolefin particles is carried out in continuous and the opening of the control valve (17) is adjusted so as to keep constant the level of polyolefin particles inside the fluidized-bed reactor (1).

The control valve (17) is placed in correspondence of a restriction in the settling pipe (14) existing between the section of higher diameter (14a) and the section of lower diameter (14b).

The polyolefin particles not discharged through the discharge conduit (16) are recycled to the upper region of the fluidized-bed reactor (1) by the circulation loop (13).

The carrier gas for transporting the polyolefin particles through the pneumatic conveyor pipe (15) is taken from the gas recycle line at a point downstream the compressor (6) and upstream the heat exchanger (8), thus exploiting the pressure drop existing through the heat exchanger (8), butterfly valve (10), the distribution grid (3) and the polymer bed (2). The carrier gas is predominantly fed via line (18) at the inlet of the conveyor pipe (15). The regulation of the flow rate of the polyolefin particles recycled through the circulation loop (13) is carried out by means of the control valves (19) and (20), adjusting the flow rate of the carrier gas entering the conveyor pipe (15).

When starting a fluidized-bed reactor according to the present disclosure, it is possible to have a reduced recycle gas velocity in the starting phase compared to the recycle gas velocity in steady-stated operation while having the same differential pressure across the compressor. This reduces the carry-over of fines in the starting phase while a sufficient amount of carrier gas can be provided to guarantee a good circulation of the polyolefin particles through the pneumatic conveyor pipe.

In another preferred embodiment of the present disclosure, the gas-phase polymerization reactor is a multizone circulating reactor comprising a downcomer which is equipped at the bottom with a throttling valve. This valve is employed for controlling the flow of the growing polyolefin particles from the downcomer into the riser. The throttling valve is preferably a mechanical valve, such as a simple or double butterfly valve or a ball valve. A stream of a gas, sometimes denominated as "dosing gas", is fed into the lower part of the downcomer at one or more positions shortly above the valve to facilitate the flow of the growing polyolefin particles through the valve. By varying the opening of the valve and/or varying the flow rate of the dosing gas, it is possible to adjust the velocity of the polyolefin particles within the downcomer. A further stream of a gas, sometimes denominated as "transport gas", is fed below the downcomer into the part of the multizone circulating reactor connecting the downcomer with the riser for conveying the polyolefin particles from the bottom of the downcomer to the riser. As well the dosing gas as the transport gas is recycle gas which is provided by side lines which branch off the recycle line. Multizone circulating reactors of such a type are, for example, disclosed by WO 2012/031986 A1. By having the recycle line equipped with both a centrifugal compressor comprising variable guide vanes and a butterfly valve, it is possible to reduce the flow rate of the recycle gas, for example in the start-up phase to reduce carry-over of fines, while keeping a sufficient high differential pressure across the side lines branching off the recycle line for providing sufficient amounts of dosing gas and of transport gas to control the flow of polyolefin particles in the downcomer and the transportation of polyolefin particles from the downcomer to the riser.

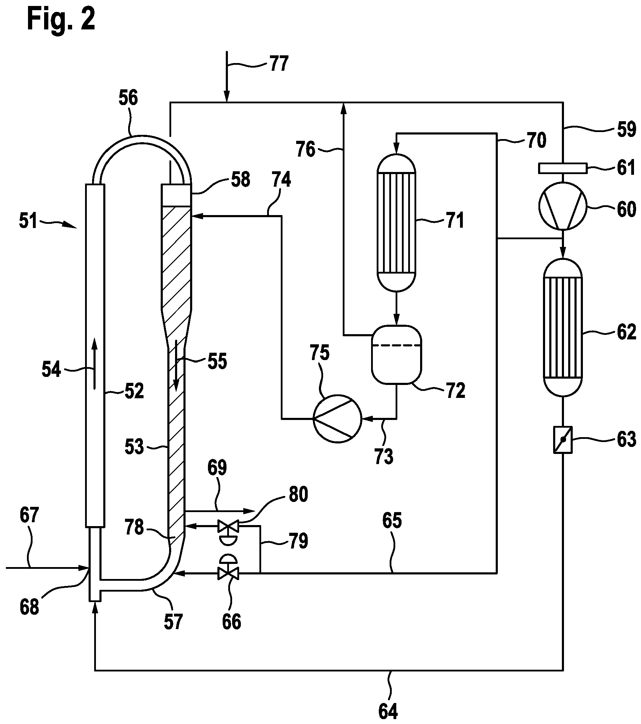

Figure 2 shows schematically a multizone circulating reactor for carrying out the process of the present disclosure.

The multizone circulating reactor (51) comprises as first reaction zone a riser (52) and as second reaction zone a downcomer (53) which are repeatedly passed by the polyolefin particles. Within riser (52), the polyolefin particles flow upward under fast fluidization conditions along the direction of arrow (54). Within the downcomer (53), the polyolefin particles flow downward under the action of gravity along the direction of the arrow (55). The riser (52) and the downcomer (53) are appropriately interconnected by the interconnection bends (56) and (57).

After flowing through the riser (52), the polyolefin particles and the reaction gas mixture leave riser (52) and are conveyed to a solid/gas separation zone (58). This solid/gas separation can be effected by using conventional separation means such as, for example, a centrifugal separator like a cyclone. From the separation zone (58) the polyolefin particles enter downcomer (53).

The reaction gas mixture leaving the separation zone (58) is recycled to the riser (52) by means of a recycle line (59), equipped with a centrifugal compressor (60) comprising variable guide vanes (61) and a heat exchanger (62). The recycle line (59) further comprises, downstream of heat exchanger (62), a butterfly valve (63). Between the compressor (60) and the heat exchanger (62), the recycle line (59) splits and the gaseous mixture is divided into two separated streams: line (64) conveys a part of the recycle gas through the heat exchanger (62) and the butterfly valve (63) to the bottom of riser (52), so as to establish fast fluidization conditions therein, while line (65) conveys another part of the recycle gas into the interconnection bend (57). For controlling the flow rate of the transport gas through line (65) into the interconnection bend (57), line (65) is equipped with a control valve (66).

A suspension of a solid catalyst component is fed via line (67) to a catalyst injection point (68) of the multizone circulating reactor (51) or, if the multizone circulating reactor (51) is operated as a downstream reactor in a cascade of gas-phase reactors, a stream of growing polyolefin particles from a previously arranged gas-phase reactor is fed via line (67) to a polymer injection point (68). The polyolefin particles obtained in the multizone circulating reactor (51) are continuously discharged from the bottom part of the downcomer (53) via the discharge line (69).

A part of the gaseous mixture leaving the separation zone (58) exits the recycle line (59) after having passed the compressor (60) and is sent through line (70) to the heat exchanger (71), where it is cooled to a temperature at which the monomers and the optional inert gas are partially condensed. A separating vessel (72) is placed downstream of the heat exchanger (71). The separated liquid is withdrawn from the separating vessel (72) via line (73) and fed to downcomer (53) through line (74) by means of a pump (75) to generate the barrier for preventing the reaction gas mixture of the riser (52) from entering the downcomer (53). The gaseous mixture obtained as gas-phase in the separating vessel (72) is recirculated to recycle line (59) through line (76). Make-up monomers, make-up comonomers, and optionally inert gases and/or process additives can be introduced into the recycle line (59) via line (77).

The bottom of the downcomer (53) is equipped with a butterfly valve (78) having an adjustable opening for adjusting the flow of polyolefin particles from downcomer (53) through interconnection bend (57) into the riser (52). Above the butterfly valve (78), amounts of a recycle gas mixture coming from the recycle line (59) through line (79) are introduced as dosing gas into the downcomer (53) to facilitate the flow of the polyolefin particles through butterfly valve (78). For controlling the flow rate of the dosing gas, line (79) is equipped with a control valve (80).

In a further preferred embodiment of the present disclosure, the gas-phase polymerization reactor is part of a reactor cascade. Preferably, the reactor cascade comprises a first gas-phase reactor and a subsequent second gas-phase reactor and a side line, which branches off the recycle line of the second gas-phase reactor, is the transfer line for transferring polyolefin particles from the first gas-phase reactor to the second gas-phase reactor. The transfer of polyolefin particles from the first gas-phase reactor to the second gas-phase reactor then occurs by a stream of a gas, sometimes denominated as "pick-up gas", which is recycle gas of the second gas-phase reactor. A reactor cascade of such a type is, for example, disclosed by WO 2013/0853548 A1. By having the recycle line of the second gas-phase reactor equipped with both a centrifugal compressor comprising variable guide vanes and a butterfly valve, it is possible to reduce the flow rate of the recycle gas, for example in the start-up phase to reduce carry-over of fines, while keeping a sufficient high differential pressure across the side line branching off the recycle line for providing a sufficient amount of pick-up gas for pneumatically transporting the polyolefin particles from the first gas-phase reactor of the reactor cascade to the second gas-phase reactor of the reactor cascade and for reliably emptying the transfer line when the discharge of polyolefin particles from the first gas-phase reactor of the reactor cascade is interrupted or terminated.

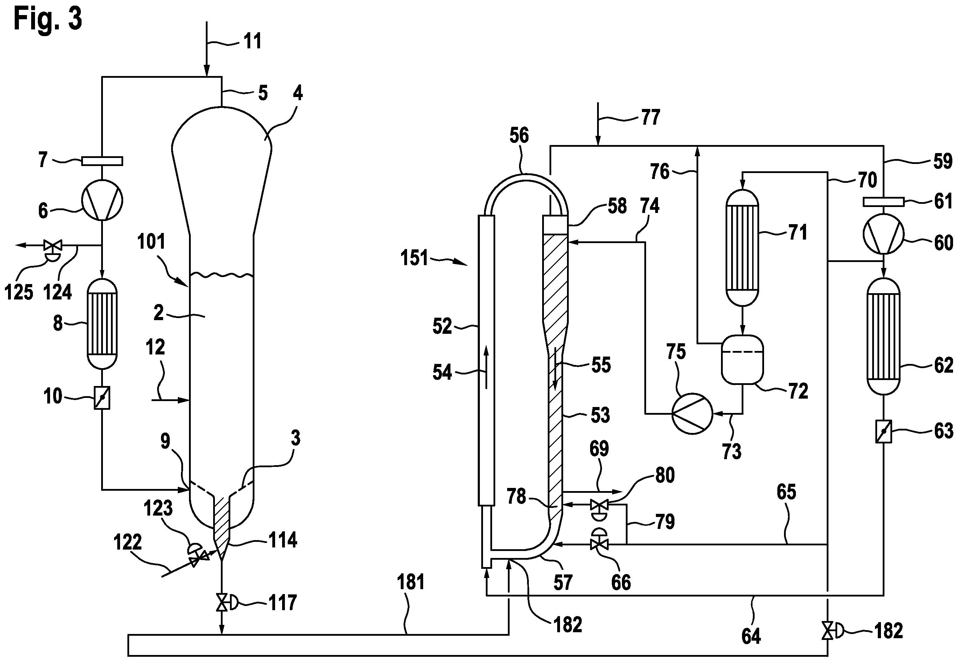

Figure 3 shows schematically a cascade of two serially connected gas-phase reactors for carrying out the process of the present disclosure.

The fluidized-bed reactor (101) shown in Figure 3 is similar to the fluidized-bed reactor (1) shown in Figure 1 and the multizone circulating reactor (151) shown in Figure 3 is similar to the multizone circulating reactor (51) shown in Figure 2.

The fluidized-bed reactor (101) differs from the fluidized-bed reactor (1) in that the fluidized-bed reactor (101) does not comprise a circulation loop (13). Instead, the settling pipe (114) is closed at the lower end by a discharge valve (117), which is preferably a segmental ball valve. The bed of polyolefin particles contained in the settling pipe (114) during operation of fluidized-bed reactor (101) enters the settling pipe (114) at the upper opening which is integrated into the gas distribution grid (3) and moves from top to bottom of the settling pipe. Discharge valve (117) is arranged above a line (181) which branches off the line (65) of the multizone circulating reactor (151) and carries a part of the recycle gas of multizone circulating reactor (151). For controlling the flow rate of the pick-up gas through line (181), line (181) is equipped with a control valve (182). The polyolefin particles having passed discharge valve (117) enter the line (181) and are transported by the pick-up gas to the multizone circulating reactor (151) which the polyolefin particles enter at position (182).

The settling pipe (114) is further equipped with a line (121), preferably at a position near the lower end of the settling pipe (114), for introducing a fluid that induces an upward stream of the fluid in the bed of polyolefin particles within the settling pipe (114). In that way, it is prevented that the reaction gas mixture of the fluidized-bed reactor (101) enters the line (181) and so multizone circulating reactor (151). The flow of the fluid in line (121) is controlled by a control valve (122). To compensate for the part of the fluid introduced into settling pipe (114) through line (121) which enters the fluidized-bed reactor (101) through settling pipe (114), a portion of the reaction gas within fluidized-bed reactor (101) has to be withdrawn. This occurs through withdrawal line (124), which branches off recycle line (5) between the centrifugal compressor (6) and the heat exchanger (8). The gas flow through withdrawal line (124) is controlled by a control valve (125). The reaction gas withdrawn through line (124) is preferably transferred to a work-up section (not shown in Figure 3).

The present disclosure further provides a process for preparing an olefin polymer comprising homopolymerizing an olefin or copolymerizing an olefin and one or more other olefins at temperatures of from 20 to 200°C and pressures of from 0.5 to 10 MPa in the presence of a polymerization catalyst, wherein the polymerization is carried out in a gas-phase polymerization reactor as described in the above.

Preferably, the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene. In a preferred embodiment, the resulting polyolefin is a high density polyethylene having a density determined according to ISO 1183 at 23°C from 0.945 to 965 g/cm³.

The gas-phase polymerization reactors of the present disclosure may be operated at pressures of from 0.5 MPa to 10 MPa, preferably from 1.0 MPa to 8 MPa and in particular from 1.5 MPa to 4 MPa, wherein these pressures, as all pressures given in the present disclosure, have to be understood as being absolute pressures, i.e. pressure having the dimension MPa (abs). The polymerization is preferably carried out at temperatures of from 30°C to 160°C, particularly preferably from 65°C to 125°C, with temperatures in the upper part of this range being preferred for preparing ethylene copolymers of relatively high density and temperatures in the lower part of this range being preferred for preparing ethylene copolymers of lower density.

The polymerization in the gas-phase polymerization reactors may also be carried out in a condensing or super-condensing mode, in which part of the circulating reaction gas mixture is cooled to below the dew point and returned to the reactor either separately as a liquid and a gas-phase or together as a two-phase mixture in order to make additional use of the enthalpy of vaporization for cooling the reaction gas. When operating in a condensing or super-condensing mode, the gas-phase polymerization reactor is preferably a fluidized-bed reactor.

In a preferred embodiment of the present disclosure, the polymerization is carried out in the presence of an inert gas such as nitrogen or an alkane having from 1 to 10 carbon atoms such as methane, ethane, propane, n-butane, isobutane, n-pentane, isopentane or n-hexane or mixtures thereof. The use of nitrogen or propane as inert gas, if appropriate in combination with further alkanes, is preferred. In especially preferred embodiments of the present disclosure, the polymerization is carried out in the presence of a C3-C5 alkane as polymerization diluent and most preferably in the presence of propane, especially in the case of homopolymerization or copolymerization of ethylene. The reaction gas mixtures within the reactor additionally comprise the olefins to be polymerized, i.e. a main monomer and one or more optional comonomers. In a preferred embodiment of the present disclosure, the reaction gas mixture has a content of inert components from 30 to 99 vol.%, more preferably from 40 to 95 vol.%, and especially from 45 to 85 vol.%. In another preferred embodiment of the present disclosure, especially if the main monomer is propylene, no or only minor amounts of inert diluent are added. The reaction gas mixture may further comprise additional components such as antistatic agents or molecular weight regulators like hydrogen. The components of the reaction gas mixture may be fed into the gas-phase polymerization reactor or into the recycle line in gaseous form or as liquid which then vaporizes within the reactor or the recycle line.

The polymerization of olefins can be carried out using all customary olefin polymerization catalysts. That means the polymerization can be carried out using Phillips catalysts based on chromium oxide, using Ziegler- or Ziegler-Natta-catalysts, or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally an electron donor compound and/or a particulate inorganic oxide as a support material.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

Preferred catalysts are also Phillips-type chromium catalyst, which are preferably prepared by applying a chromium compound to an inorganic support and subsequently activating the obtained catalyst precursor at temperatures in the range from 350 to 1000°C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc. Combinations of the abovementioned elements are also possible. The catalyst precursor can be doped with fluoride prior to or during activation. As supports for Phillips-type catalysts, which are also known to those skilled in the art, mention may be made of aluminum oxide, silicon dioxide (silica gel), titanium dioxide, zirconium dioxide or their mixed oxides or cogels, or aluminum phosphate. Further suitable support materials can be obtained by modifying the pore surface area, e.g. by means of compounds of the elements boron, aluminum, silicon or phosphorus. Preference is given to using a silica gel. Preference is given to spherical or granular silica gels, with the former also being able to be spray dried. The activated chromium catalysts can subsequently be prepolymerized or prereduced. The prereduction is usually carried out by means of cobalt or else by means of hydrogen at 250°C to 500 °C, preferably at 300 °C to 400 °C, in an activator.

In a preferred embodiment of the present disclosure, the polymerization is carried out at a pre-determined differential pressure across the centrifugal compressor and variations of the recycle gas flow rate are carried out by both varying the position of the guide vanes and the position of the butterfly valve.

Preferably, the recycle line of the gas-phase reactor has one or more side lines and the side lines branch off the recycle line at a position between the centrifugal compressor and the butterfly valve and the one or more side lines are equipped with control valves for controlling the flow rate of the branched-off recycle gas in the side lines and the polymerization is carried out in a way that the pressure in the one or more side lines upstream of the control valves is from 0.01 MPa to 0.2 MPa higher than the pressure in the recycle line downstream of the butterfly valve, preferably from 0.02 MPa to 0.1 MPa higher than the pressure in the recycle line downstream of the butterfly valve.

In a further preferred embodiment of the present disclosure, the polymerization is a polymerization in a gas-phase reactor which a part of a cascade of polymerization reactors, wherein also one or more polymerizations in other gas-phase reactors of the cascade of polymerization reactors may be polymerizations according to the present disclosure. Suitable combinations of such polymerizations reactors include a fluidized-bed reactor followed by a multizone circulating reactor, a multizone circulating reactor followed by a fluidized-bed reactor, a cascade of two or three fluidized-bed reactors, and one or two loop reactors followed by one or two fluidized-bed reactors.

### EXAMPLES

The melt flow rate MFR_{190/2.16} was determined according to DIN EN ISO 1133-1:2012-03 at a temperature of 190 °C under a load of 2.16 kg.

The density was determined according to DIN EN ISO 1183-1:2004, Method A (Immersion) with compression molded plaques of 2 mm thickness. The compression molded plaques were prepared with a defined thermal history: pressed at 180 °C, 20 MPa for 8 min with subsequent crystallization in boiling water for 30 min.

### Comparative Example A

A fluidized-bed reactor having the configuration shown in Fig. 1 including a centrifugal compressor comprising variable guide vanes but without having a butterfly valve installed in the recycle line downstream of the heat-exchanger was used to carry out the gas-phase polymerization of Comparative Example A. The design parameters of the fluidized-bed reactor are the following:
Diameter of the reactor: 4.0 m
Diameter of the circulation loop: 0.2 m
Conical shape of the fluidization grid with a bottom apex.
The fluidized-bed reactor was designed to be operated with a fluidization velocity within the fluidized-bed reactor of 0.9 m/s.

1.2 kg/h of a Ziegler-Natta catalyst, which had been prepared according to example 13 of WO 2004/106388 A1 with a molar feed ratio of electron donor/Ti of 8, were fed using 25 kg/h of liquid propane to a first stirred precontacting vessel, into which also triisobutylaluminum (TIBA), diethylaluminum chloride (DEAC) and tetrahydrofuran (THF) were dosed. The weight ratio of triisobutylaluminum to diethylaluminum chloride was 7:1. The weight ratio of the aluminum alkyls to the catalyst solid was 10:1. The weight ratio of the aluminum alkyls to THF was 10:1. The first precontacting vessel was kept at 50 °C with a residence time of 10 minutes. The catalyst suspension of the first precontacting vessel was continuously transferred to a second stirred precontacting vessel, which was also operated at 50 °C with a residence time of 60 minutes. The activated catalyst suspension was then continuously introduced into the fluidized-bed reactor.

The production of a polyethylene was started with an empty reactor; i.e. with a reactor which did not contain polyolefin particles. The fluidization velocity within the fluidized-bed reactor was set to 0.9 m/s. 24 hours after the catalyst feed to the first precontacting vessel had been started, the fluidized-bed reactor was in steady state. The fluidized-bed reactor was operating at an absolute pressure of 25 bar and a temperature of 80°C. The pressure differential across the centrifugal compressor was 0.2 MPa. The reaction gas had the following composition:
ethylene = 24 mole-%; 1-butene = 14 mole-%; H2 = 5.5 mole-%; ethane = 1 mole-%;
propane = 55.5 mole-%. The plant throughput was 16 t/h, catalyst productivity was 10 000 g polyethylene/g catalyst; and the residence time was 2.8 h.

The resulting polyethylene had an MFR_{190/2.16} of 0.95 g/10 min and a density of 0.9185 g/cm³.

After two days of steady-state operation, a slight decrease in the efficiency of the heat-exchanger was observed. The polymerization was terminated and the recycle system was inspected. Wall layers of polymer were detected in the pipes of the heat-exchanger and on the wall of the recycle line upstream of the heat exchanger. Further, a small amount of chunks was observed within the heat-exchanger on top of the heat-exchanger pipes.

### Comparative Example B

After cleaning of the polymerization reactor, the polymerization of Comparative Example A was repeated; however, the fluidized-bed reactor was started up with a fluidization velocity within the fluidized-bed reactor of 0.7 m/s to reduce the carry-over into the recycle line. This resulted in a pressure differential across the centrifugal compressor of 0.1 MPa. 12 hours after the start-up, the circulation loop was plugged, indicating that only an insufficient circulation of polyolefin particles in the circulation loop developed.

### Example 1

After cleaning of the polymerization reactor, the polymerization of Comparative Example A was repeated, however after modification of the fluidized-bed reactor. The modified polymerization reactor had the configuration shown in Fig. 1 including a recycle line which was not only equipped with a centrifugal compressor comprising variable guide vanes but also comprising a butterfly valve installed downstream of the heat exchanger.

The fluidized-bed reactor was started up and operated with a fluidization velocity within the fluidized-bed reactor of 0.75 m/s, however with a partly closed butterfly valve so that the pressure differential across the centrifugal compressor was 0.2 MPa. No plugging of the circulation loop was observed.

The polymerization was continued for a week without any plugging of the circulation loop or of the reactor discharge system. The plant was then shut down as per schedule. The subsequent inspection of the recycle system showed a clean recycle line and a clean heat exchanger without any surface layers of polymer.

## Claims

1. A gas-phase polymerization reactor for the gas-phase polymerization of olefins comprising at least one polymerization zone which is equipped with a recycle line for withdrawing reaction gas from the reactor, leading the reaction gas through a heat-exchanger for cooling and feeding the reaction gas back to the reactor, wherein the recycle line is equipped with the heat-exchanger, a centrifugal compressor comprising variable guide vanes, and a butterfly valve, and the variable guide vanes are arranged upstream of the centrifugal compressor and the butterfly valve is arranged downstream of the centrifugal compressor.

2. The reactor of claim 1, wherein the recycle line has one or more side lines and the side lines branch off the recycle line at a position between the centrifugal compressor and the butterfly valve and the one or more side lines are equipped with control valves for controlling the flow rate of the branched-off recycle gas in the side lines.

3. The reactor of claim 1 or 2, wherein the butterfly valve comprises a rotational disc which has a smaller area than the cross-section of the recycle line at the location of the butterfly valve.

4. The reactor of any of claims 1 to 3, wherein the butterfly valve is arranged downstream of the heat-exchanger.

5. The reactor of any of claims 1 to 4, wherein the centrifugal compressor is arranged upstream of the heat-exchanger.

6. The reactor of any of claims 1 to 5, wherein the recycle line is further equipped with a cyclone upstream of the centrifugal compressor and the heat-exchanger.

7. The reactor of any of claims 1 to 6, wherein the reactor is a fluidized-bed reactor.

8. The reactor of any of claims 1 to 6, wherein the reactor is a multizone circulating reactor in which one polymerization zone is a riser, in which growing polyolefin particles flow upwards under fast fluidization or transport conditions, and another polymerization zone is a downcomer, in which the growing polyolefin particles flow downward in a densified form, wherein the riser and the downcomer are interconnected and polyolefin particles leaving the riser enter the downcomer and polyolefin particles leaving the downcomer enter the riser, thus establishing a circulation of polyolefin particles through the riser and the downcomer.

9. The reactor of any of claims 1 to 8, wherein the reactor is part of a reactor cascade.

10. The reactor of claim 9, wherein the reactor cascade comprises a first gas-phase reactor and a subsequent second gas-phase reactor and a side line, which branches off the recycle line of the second gas-phase reactor, is the transfer line for transferring polyolefin particles from the first gas-phase reactor to the second gas-phase reactor.

11. A process for preparing an olefin polymer comprising homopolymerizing an olefin or copolymerizing an olefin and one or more other olefins at temperatures of from 20 to 200°C and pressures of from 0.5 to 10 MPa in the presence of a polymerization catalyst, wherein the polymerization is carried out in the gas-phase polymerization reactor of any of claims 1 to 10.

12. The process of claim 11, wherein the polymerization is carried out at a pre-determined pressure differential across the centrifugal compressor and variations of the recycle gas flow rate are carried out by both varying the position of the guide vanes and the position of the butterfly valve.

13. A process of claims 11 or 12, wherein the recycle line has one or more side lines and the side lines branch off the recycle line at a position between the centrifugal compressor and the butterfly valve and the one or more side lines are equipped with control valves for controlling the flow rate of the branched-off recycle gas in the side lines and the pressure in the one or more side lines upstream of the control valves is from 0.01 MPa to 0.2 MPa higher than the pressure in the recycle line downstream of the butterfly valve.

14. The process of any of claims 11 to 13, wherein the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene.

15. The process of claim 14, wherein the resulting polyolefin is a high density polyethylene having a density determined according to ISO 1183 at 23°C from 0.945 to 0.965 g/cm³.

## Patentansprüche

1. Gasphasenpolymerisationsreaktor für die Gasphasenpolymerisation von Olefinen, umfassend mindestens eine Polymerisationszone, die mit einer Rückführungsleitung ausgestattet ist, um Reaktionsgas aus dem Reaktor abzuziehen, das Reaktionsgas zum Kühlen durch einen Wärmetauscher zu leiten und das Reaktionsgas in den Reaktor zurückzuspeisen, wobei die Rückführungsleitung mit dem Wärmetauscher, einem Zentrifugalkompressor, der variable Leitschaufeln umfasst, und einer Drosselklappe ausgestattet ist, und wobei die variablen Leitschaufeln vorgeordnet zu dem Zentrifugalkompressor angeordnet sind und die Drosselklappe nachgeordnet zu dem Zentrifugalkompressor angeordnet ist.

2. Reaktor nach Anspruch 1, wobei die Rückführungsleitung eine oder mehrere Nebenleitungen aufweist und die Nebenleitungen von der Rückführungsleitung an einer Position zwischen dem Zentrifugalkompressor und der Drosselklappe abzweigen, und wobei die eine oder mehreren Nebenleitungen mit Steuerventilen ausgestattet sind, um die Flussrate des abgezweigten Rückführungsgases in den Nebenleitungen zu steuern.

3. Reaktor nach Anspruch 1 oder 2, wobei die Drosselklappe eine Drehscheibe umfasst, die einen kleineren Flächeninhalt als der Querschnitt der Rückführungsleitung an der Position der Drosselklappe aufweist.

4. Reaktor nach einem der Ansprüche 1 bis 3, wobei das Drosselventil nachgeordnet zu dem Wärmetauscher angeordnet ist.

5. Reaktor nach einem der Ansprüche 1 bis 4, wobei der Zentrifugalkompressor vorgeordnet zu dem Wärmetauscher angeordnet ist.

6. Reaktor nach einem der Ansprüche 1 bis 5, wobei die Rückführungsleitung des Weiteren mit einem Zyklon vorgeordnet zu dem Zentrifugalkompressor und dem Wärmetauscher ausgestattet ist.

7. Reaktor nach einem der Ansprüche 1 bis 6, wobei der Reaktor ein Wirbelbettreaktor ist.

8. Reaktor nach einem der Ansprüche 1 bis 6, wobei der Reaktor ein zirkulierender Mehrzonenreaktor ist, wobei eine Polymerisationszone ein Steigrohr ist, in dem wachsende Polyolefinpartikel unter schnellen Verwirbelungs- oder Transportbedingungen aufwärts fließen, und eine andere Polymerisationszone ein Fallrohr ist, in dem die wachsenden Polyolefinpartikel in verdichteter Form abwärts fließen, wobei das Steigrohr und das Fallrohr miteinander verbunden sind und Polyolefinpartikel, die das Steigrohr verlassen, in das Fallrohr eintreten, und Polyolefinpartikel, die das Fallrohr verlassen, in das Steigrohr eintreten, wodurch eine Zirkulation von Polyolefinpartikeln durch das Steigrohr und das Fallrohr hindurch aufgebaut wird.

9. Reaktor nach einem der Ansprüche 1 bis 8, wobei der Reaktor Teil einer Reaktorkaskade ist.

10. Reaktor nach Anspruch 9, wobei die Reaktorkaskade einen ersten Gasphasenreaktor und einen nachfolgenden zweiten Gasphasenreaktor umfasst, und eine Nebenleitung, die von der Rückführungsleitung des zweiten Gasphasenreaktors abzweigt, die Transferleitung zum Transferieren von Polyolefinpartikeln von dem ersten Gasphasenreaktor in den zweiten Gasphasenreaktor ist.

11. Verfahren zur Herstellung eines Olefinpolymers, umfassend Homopolymerisieren eines Olefins oder Copolymeriseren eines Olefins und eines oder mehrerer anderer Olefine bei Temperaturen von 20 bis 200 °C und Drücken von 0,5 bis 10 MPa in Gegenwart eines Polymerisationskatalysators, wobei die Polymerisation in dem Gasphasenpolymerisationsreaktor nach einem der Ansprüche 1 bis 10 durchgeführt wird.

12. Verfahren nach Anspruch 11, wobei die Polymerisation mit einem vorbestimmten Druckdifferential über dem Zentrifugalkompressor durchgeführt wird, und Variationen der Rückführungsgasflussrate durchgeführt werden, indem sowohl die Position der Leitschaufeln als auch die Position der Drosselklappe variiert werden.

13. Verfahren nach den Ansprüchen 11 oder 12, wobei die Rückführungsleitung eine oder mehrere Nebenleitungen aufweist und die Nebenleitungen von der Rückführungsleitung an einer Position zwischen dem Zentrifugalkompressor und der Drosselklappe abzweigen und die eine oder mehreren Nebenleitungen mit Steuerventilen ausgestattet sind, um die Flussrate des abgezweigten Rückführungsgases in den Nebenleitungen zu steuern, und wobei der Druck in der einen oder den mehreren Nebenleitungen vorgeordnet zu den Steuerventilen 0,01 MPa bis 0,2 MPa höher als der Druck in der Rückführungsleitung nachgeordnet zu der Drosselklappe ist.

14. Verfahren nach einem der Ansprüche 11 bis 13, wobei die Polymerisation eine Homopolymerisation von Ethylen oder eine Copolymerisation von Ethylen und einem oder mehreren anderen Olefinen ausgewählt aus der Gruppe bestehend aus 1-Buten, 1-Hexen und 1-Octen ist, oder die Polymerisation eine Homopolymerisation von Propylen oder eine Copolymerisation von Propylen und einem oder mehreren anderen Olefinen ausgewählt aus der Gruppe bestehend aus Ethylen, 1-Buten und 1-Hexen ist.

15. Verfahren nach Anspruch 14, wobei das resultierende Polyolefin ein Polyethylen mit hoher Dichte mit einer gemäß ISO 1183 bei 23 °C bestimmten Dichte von 0,945 bis 0,965 g/cm³ ist.

## Revendications

1. Réacteur de polymérisation en phase gazeuse pour la polymérisation en phase gazeuse d'oléfines comprenant au moins une zone de polymérisation qui est équipée d'une conduite de recyclage pour soutirer le gaz de réaction du réacteur, pour guider le gaz de réaction à travers un échangeur de chaleur pour le refroidir et pour alimenter le gaz de réaction en retour vers le réacteur, la conduite de recyclage étant équipée de l'échangeur de chaleur, d'un compresseur centrifuge comprenant des aubes de guidage variables et d'une vanne papillon et les aubes de guidage variables étant disposées en amont du compresseur centrifuge et la vanne papillon étant disposée en aval du compresseur centrifuge.

2. Réacteur selon la revendication 1, la conduite de recyclage présentant une ou plusieurs conduites latérales et les conduites latérales se ramifiant à partir de la conduite de recyclage en une position entre le compresseur centrifuge et la vanne papillon et ladite une ou lesdites plusieurs conduites latérales étant équipées de vannes de commande pour réguler le débit du gaz de recyclage bifurqué dans les conduites latérales.

3. Réacteur selon la revendication 1 ou 2, la vanne papillon comprenant un disque rotatif qui présente une surface plus petite que la section transversale de la conduite de recyclage à l'emplacement de la vanne papillon.

4. Réacteur selon l'une quelconque des revendications 1 à 3, la vanne papillon étant disposée en aval de l'échangeur de chaleur.

5. Réacteur selon l'une quelconque des revendications 1 à 4, le compresseur centrifuge étant disposé en amont de l'échangeur de chaleur.

6. Réacteur selon l'une quelconque des revendications 1 à 5, la conduite de recyclage étant en outre équipée d'un cyclone en amont du compresseur centrifuge et de l'échangeur de chaleur.

7. Réacteur selon l'une quelconque des revendications 1 à 6, le réacteur étant un réacteur à lit fluidisé.

8. Réacteur selon l'une quelconque des revendications 1 à 6, le réacteur étant un réacteur à circulation multizone dans lequel une zone de polymérisation est une colonne montante, dans laquelle des particules de polyoléfine en croissance s'écoulent vers le haut dans des conditions de fluidisation ou de transport rapides, et une autre zone de polymérisation est une colonne descendante, dans laquelle les particules de polyoléfine en croissance s'écoulent vers le bas sous une forme densifiée, la colonne montante et la colonne descendante étant interconnectées et les particules de polyoléfine qui quittent la colonne montante entrant dans la colonne descendante et les particules de polyoléfine qui quittent la colonne descendante entrant dans la colonne montante, établissant ainsi une circulation de particules de polyoléfine à travers la colonne montante et la colonne descendante.

9. Réacteur selon l'une quelconque des revendications 1 à 8, le réacteur faisant partie d'une cascade de réacteurs.

10. Réacteur selon la revendication 9, la cascade de réacteurs comprenant un premier réacteur à phase gazeuse et un deuxième réacteur à phase gazeuse subséquent et une conduite latérale, qui se ramifie à partir de la conduite de recyclage du deuxième réacteur à phase gazeuse et qui est la conduite de transfert pour transférer des particules de polyoléfine du premier réacteur à phase gazeuse au deuxième réacteur à phase gazeuse.

11. Procédé de préparation d'un polymère oléfinique comprenant l'homopolymérisation d'une oléfine ou la copolymérisation d'une oléfine et d'une ou plusieurs autres oléfines à des températures de 20 à 200°C et à des pressions de 0,5 à 10 MPa en présence d'un catalyseur de polymérisation, la polymérisation étant effectuée dans le réacteur de polymérisation à phase gazeuse selon l'une quelconque des revendications 1 à 10.

12. Procédé selon la revendication 11, la polymérisation étant effectuée à un différentiel de pression prédéterminé à travers le compresseur centrifuge et des variations du débit de gaz de recyclage étant effectuées par la variation à la fois de la position des aubes de guidage et de la position de la vanne papillon.

13. Procédé selon les revendications 11 ou 12, la conduite de recyclage présentant une ou plusieurs conduites latérales et les conduites latérales se ramifiant à partir de la conduite de recyclage au niveau d'une position entre le compresseur centrifuge et la vanne papillon et ladite une ou lesdites plusieurs conduites latérales étant équipées de vannes de commande pour réguler le débit du gaz de recyclage bifurqué dans les conduites latérales et la pression dans ladite une ou lesdites plusieurs conduites latérales en amont des vannes de commande étant supérieure de 0,01 MPa à 0,2 MPa à la pression dans la conduite de recyclage en aval de la vanne papillon.

14. Procédé selon l'une quelconque des revendications 11 à 13, la polymérisation étant une homopolymérisation d'éthylène ou une copolymérisation d'éthylène et d'une ou plusieurs autres oléfines choisies dans le groupe constitué par le 1-butène, le 1-hexène et le 1-octène ou la polymérisation étant une homopolymérisation de propylène ou une copolymérisation de propylène et d'une ou plusieurs autres oléfines choisies dans le groupe constitué par l'éthylène, le 1-butène et le 1-hexène.

15. Procédé selon la revendication 14, la polyoléfine résultante étant un polyéthylène haute densité présentant une densité déterminée selon la norme ISO 1183 à 23°C de 0,945 à 0,965 g/cm³.
